# EUROPEAN PATENT APPLICATION

(11) **EP 2 809 028 A1**
(43) Date of publication of application: **03.12.2014**
(21) Application number: 13191560.5
(22) Date of filing: 05.11.2013
(51) Int. Cl.: H04L 9/06

(54) **Method and electronic device of generating digital certificate**

(30) Priority: 30.05.2013 TW 102119198
(71) Applicant: Compal Broadband Networks Inc., 114 Taipei City (TW)
(72) Inventor: Huang, Yan-Wei, 970 Hualien County (TW)
(74) Representative: Becker Kurig Straus

(57) **Abstract**

A digital certificate generating method for an electronic device (10) comprising a communication module (100) corresponding to a key (KEY) and a digital certificate module (110) comprises the digital certificate module (110) generating a digital certificate (DC) corresponding to the communication module (100) according to the key (KEY); and the digital certificate module (110) installing the digital certificate (DC) corresponding to the communication module (100) into the communication module (100).

## Description

### Field of the Invention

The present invention relates to an electronic device and a digital certificate generating method, and more particularly, to a method for automatically generating and updating the digital certificate of an electronic device.

### Background of the Invention

X.509 is a network identity certificate framework provided by the International Telecommunication Union (ITU) and can be used in the ITU X.500 E-Mail system. The network identity certificate framework is based on the public key cryptography (PKC) and the digital signature, and the structure of a digital certificate and the protocol of using the digital certificate for authentication are accordingly defined.

The digital certificate may be regarded as a passport for the network, and it utilizes the public key cryptography to verify the identity. Unless a third party obtains a private key from the certification authorities (CA), the digital certificate issued by a digital certificate management center cannot be easily faked, thereby ensuring the accuracy and confidentiality of the data on the network. The digital certificate can represent the digital identities of users and also network devices, organizations and even programs. For example, the type of the digital certificate includes a personal digital certificate, a server digital certificate, an object digital certificate, etc. However, the firmware image of an electronic device initialized in the factory does not comprise any digital certificate but the digital certificate must be generated independently and separately - namely, importing the digital certificate with an additional factory production procedure. Accordingly, the process and steps are complicated and time-consuming, and hence the capacity and desire for further improvement undoubtedly remain in the field.

### Summary of the Invention

It is one of the objectives of the present invention to provide an electronic device and a digital certificate generating method so as to automatically generate and update the digital certificate of the electronic device.

This is achieved by a digital certificate generating method according to claims 1, 3, 4, 6, 8 and 12. The dependent claims pertain to corresponding further developments and improvements.

As will be seen more clearly from the following detailed description, a claimed digital certificate generating method for an electronic device is disclosed herein. The electronic device comprises a communication module corresponding to a key and a digital certificate module. The digital certificate generating method comprises the digital certificate module generating a digital certificate corresponding to the communication module according to the key, and the digital certificate module installing the digital certificate, which corresponds to the communication module, into the communication module.

In another aspect of the invention, a claimed digital certificate generating method for an electronic device is disclosed in the detailed description here below. The electronic device comprises a communication module corresponding to a key and a digital certificate module. The digital certificate generating method comprises the digital certificate module checking whether the key has been modified and, when the digital certificate module determines the key has been modified, the digital certificate module generating a digital certificate corresponding to the communication module according to the modified key, and the digital certificate module installing the new digital certificate, which corresponds to the communication module and the modified key, into the communication module.

In another aspect of the invention, a claimed digital certificate generating method for an electronic device is disclosed in the detailed description here below. The electronic device comprises a plurality of communication modules corresponding to a plurality of keys and a digital certificate module. The digital certificate generating method comprises the digital certificate module checking whether the keys have been modified, the digital certificate module generating at least one digital certificate corresponding to at least one of the communication modules according to at least one of the keys when the digital certificate module determines the at least one of the keys has been modified, and the digital certificate module installing the at least one of the digital certificates corresponding to the at least one of the communication modules into the at least one of the communication modules.

In another aspect of the invention, a claimed electronic device is disclosed in the detailed description here below. The electronic device comprises a communication module corresponding to a key and a digital certificate module configured to generate a digital certificate, which corresponds to the communication module according to the key, and to install the digital certificate into the communication module.

In another aspect of the invention, the claimed electronic device is disclosed in the detailed description here below. The electronic device comprises a plurality of communication modules corresponding to a plurality of keys and a digital certificate module configured to generate a plurality of digital certificates corresponding to the communication modules according to the keys and install the digital certificates into the communication modules.

### Brief Description of the Drawings

FIG. 1 is a schematic diagram illustrating an electronic device according to an embodiment of the present invention.
FIG. 2 is a schematic diagram illustrating a digital certificate generating method according to an embodiment of the present invention.
FIG. 3 is a schematic diagram illustrating an electronic device according to an embodiment of the present invention.
FIG. 4 is a schematic diagram illustrating a digital certificate generating method according to an embodiment of the present invention.

### Detailed Description

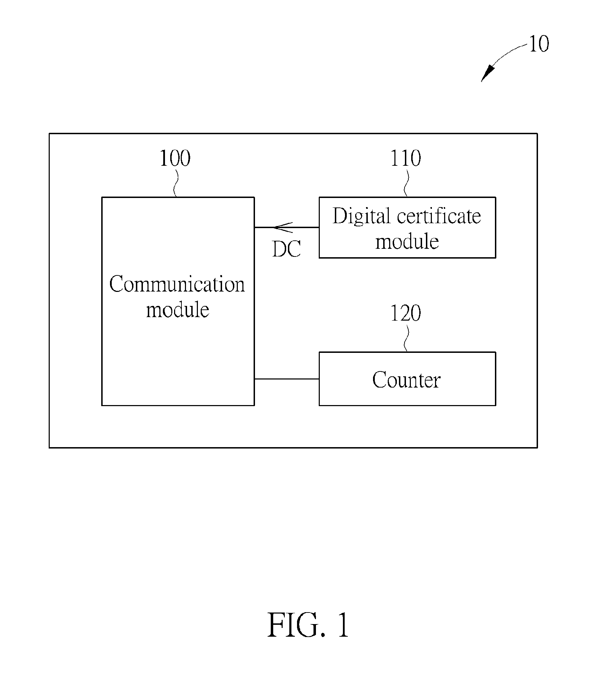

FIG. 1 is a schematic diagram illustrating an electronic device 10 according to an embodiment of the present invention. The electronic device 10 comprises a communication module 100, a digital certificate module 110 and a counter 120. The communication module 100 corresponds to a key KEY. The digital certificate module 110 is connected to the communication module 100 for generating a digital certificate DC corresponding to the communication module 100 according to the key KEY and installing the digital certificate DC corresponding to the communication module 100 into the communication module 100. The counter 120 is connected to the communication module 100 and configured to record a number N of times of modifying the key KEY. When the number N is greater than a default threshold TH, the digital certificate module 110 stops generating the digital certificate DC. More specifically, the digital certificate module 110 may generate the digital certificate DC corresponding to the communication module 100 directly according to the key KEY. Alternatively, the key KEY corresponding to the communication module 100 may be modified as well. And whenever the key KEY has been modified, the digital certificate module 110 generates the digital certificate DC (i.e., a new digital certificate) corresponding to the communication module 100 according to the key KEY, more specifically, the modified key. Meanwhile, the counter 120 records the number N of times of modifying the key KEY. Once the number N is greater than the default threshold TH, meaning that system abnormality may occur in the electronic device 10, the digital certificate module 110 stops generating the digital certificate DC.

Moreover, the digital certificate module 110 checks whether the digital certificate DC of the communication module 100 is accurately installed. If the digital certificate module 110 ascertains that the digital certificate DC is inaccurately installed, the digital certificate module 110 generates the digital certificate DC corresponding to the communication module 100 according to the key KEY. If the digital certificate module 110 finds out that the digital certificate DC is accurately installed, the digital certificate module 110 then determines whether the key KEY has been modified. If the key KEY has been modified, the digital certificate module 110 still regenerates the digital certificate DC corresponding to the communication module 100.

The key KEY may be a Media Access Control Address (MAC address) or a product number of the communication module 100.

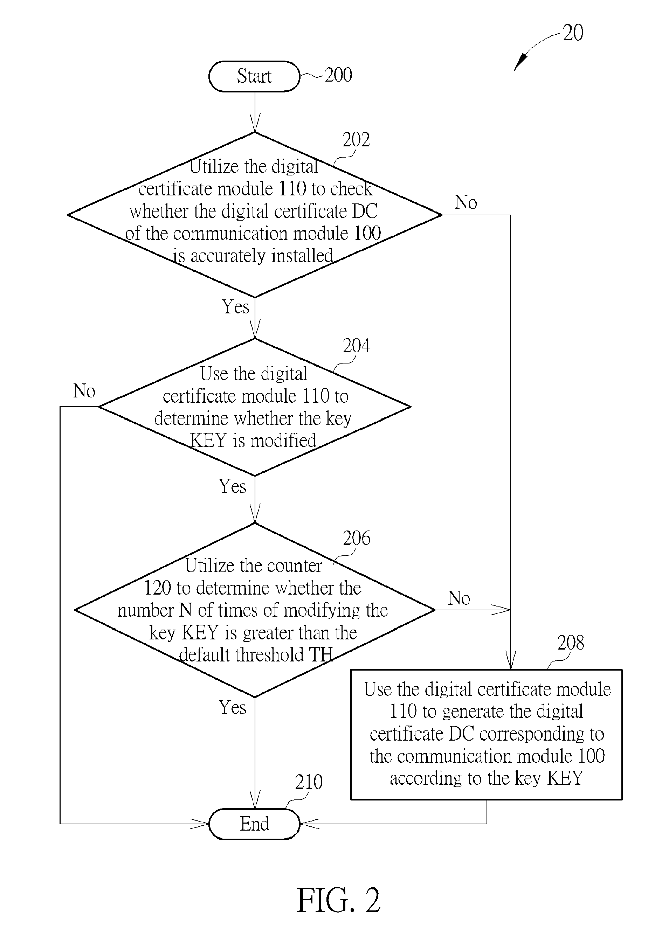

The operation principle of the electronic device 10 can be summarized into a digital certificate generating method 20 as shown in FIG. 2. The digital certificate generating method 20 comprises the following steps:
Step 200: Start.
Step 202: Utilize the digital certificate module 110 to check whether the digital certificate DC of the communication module 100 is accurately installed. If the digital certificate DC is inaccurately installed, proceed to Step 208. If the digital certificate DC is accurately installed, proceed to Step 204.
Step 204: Use the digital certificate module 110 to determine whether the key KEY has been modified. If the key KEY has been modified, proceed to Step 206. If the digital certificate DC is not modified, proceed to Step 210.
Step 206: Utilize the counter 120 to determine whether the number N of times of modifying the key KEY is greater than the default threshold TH. If the number N is greater than the default threshold TH, proceed to Step 210. If the number N is less than or equal to the default threshold TH, proceed to Step 208.
Step 208: Use the digital certificate module 110 to generate the digital certificate DC corresponding to the communication module 100 according to the key KEY.
Step 210: End.

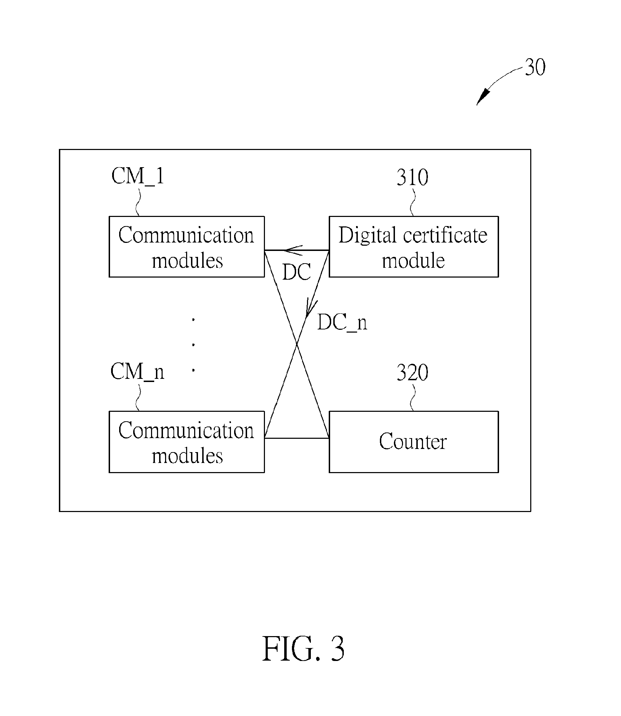

However, the number of the communication module in an electronic device is not limited to one and the electronic device may comprise a plurality of communication modules. For example, FIG. 3 is a schematic diagram illustrating an electronic device 30 according to an embodiment of the present invention. The electronic device 30 comprises communication modules CM_1-CM_n, a digital certificate module 310 and a counter 320. The communication modules CM_1-CM_n correspond respectively to the keys KEY_1-KEY_n. The digital certificate module 310 is respectively connected to the communication modules CM_1-CM_n for generating digital certificates DC_1-DC_n corresponding to the communication modules CM_1-CM_n respectively according to the keys KEY_1-KEY_n and installing the digital certificates DC_1-DC_n into the communication modules CM_1-CM_n. The counter 320 is connected to the communication modules CM_1-CM_n and configured to record the numbers N_1-N_n of times of modifying the keys KEY_1-KEY_n. When the numbers N_1-N_n are greater than the default threshold TH, the digital certificate module 310 stops generating the digital certificates DC_1-DC_n.

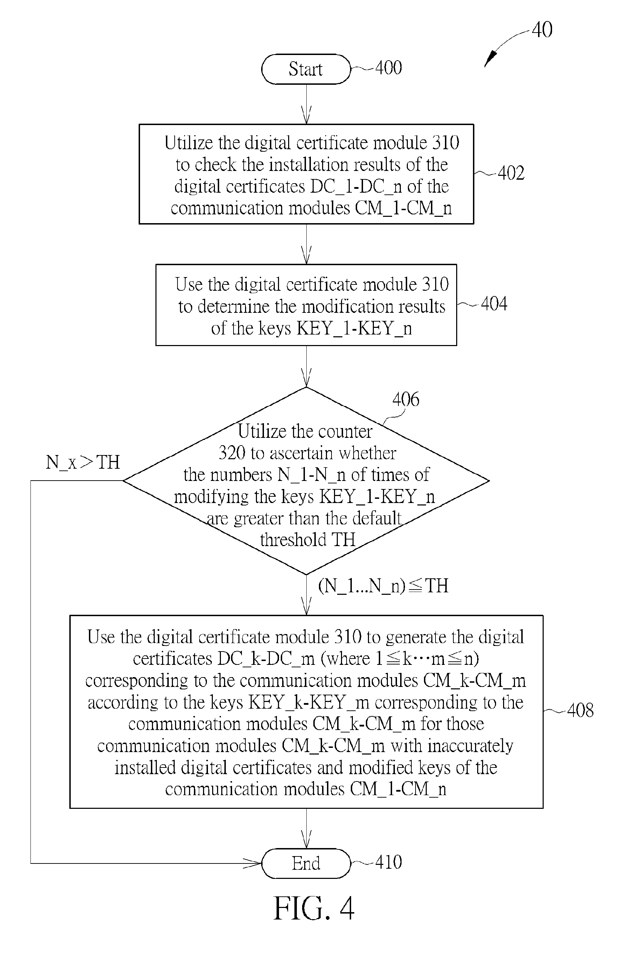

More specifically, the digital certificate module 310 is simultaneously connected to all the communication modules CM_1-CM_n, respectively checks whether the digital certificates DC_1-DC_n of the communication modules CM_1-CM_n are accurately installed, simultaneously determines whether the keys KEY_1-KEY_n have been modified, subsequently decides whether to generate the digital certificates DC_1-DC_n corresponding to the communication modules CM_1-CM_n, and accurately installs the digital certificates DC_1-DC_n into the communication modules CM_1-CM_n. The operation principle of the electronic device 30 can be summarized into a digital certificate generating method 40 as shown in FIG. 4. The digital certificate generating method 40 comprises the following steps:
Step 400: Start.
Step 402: Utilize the digital certificate module 310 to check the installation results of the digital certificates DC_1-DC_n of the communication modules CM_1-CM_n.
Step 404: Use the digital certificate module 310 to determine the modification results of the keys KEY_1-KEY_n.
Step 406: Utilize the counter 320 to ascertain whether the numbers N_1-N_n of times of modifying the keys KEY_1-KEY_n are greater than the default threshold TH. If any of the numbers N_1-N_n of times of modifying the keys KEY_1-KEY_n (e.g. the number N_x of times of modifying the key KEY_x) is greater than the default threshold TH, proceed to Step 410. If all of the numbers N_1-N_n of times of modifying the keys KEY_1-KEY_n are less than or equal to the default threshold TH, proceed to Step 408.
Step 408: Use the digital certificate module 310 to generate the digital certificates DC_k-DC_m (where 1≦k···m≦n) corresponding to the communication modules CM_k-CM_m according to the keys KEY_k-KEY_m corresponding to the communication modules CM_k-CM_m for those communication modules CM_k-CM_m with inaccurately installed digital certificates and modified keys of the communication modules CM_1-CM_n,.
Step 410: End.

To sum up, the firmware image of an electronic device initialized in the factory does not comprise any digital certificate but a digital certificate must be generated independently and separately - namely, importing the digital certificate with an additional factory production procedure. Therefore, the process and steps become complicated and time-consuming. In contrast, the digital certificate is automatically generated and updated in the electronic device of the present invention, thereby reducing manufacturing cost and speeding up the production.

## Claims

1. A digital certificate generating method for an electronic device (10) comprising a communication module (100) corresponding to a key (KEY) and a digital certificate module (110), **characterized by** the digital certificate generating method comprising steps of:
the digital certificate module (110) generating a digital certificate (DC) corresponding to the communication module (100) according to the key (KEY); and
the digital certificate module (110) installing the digital certificate (DC) corresponding to the communication module (100) into the communication module (100).

2. The digital certificate generating method of claim 1, **characterized in that** the step of the digital certificate module (110) generating the digital certificate (DC) corresponding to the communication module (100) according to the key (KEY) comprises the steps of:
the digital certificate module (110) checking whether the digital certificate (DC) of the communication module (100) is accurately installed in the communication module (100); and
the digital certificate module (110) generating the digital certificate (DC) corresponding to the communication module (100) according to the key (KEY) when the digital certificate module (110) determines the digital certificate (DC) is inaccurately installed in the communication module (100).

3. A digital certificate generating method for an electronic device (10) comprising a communication module (100) corresponding to a key (KEY) and a digital certificate module (110), **characterized by** the digital certificate generating method comprising the steps of:
the digital certificate module (110) checking whether the key (KEY) has been modified;
when the digital certificate module (110) determines the key (KEY) has been modified, the digital certificate module (110) generating a digital certificate (DC) corresponding to the communication module (100) according to the modified key (KEY); and
the digital certificate module (110) installing the digital certificate (DC) corresponding to the communication module (100) into the communication module (100).

4. A digital certificate generating method for an electronic device (30) comprising a plurality of communication modules (CM_1-CM_n) corresponding to a plurality of keys (KEY_1-KEY_n) and a digital certificate module (310), **characterized by** the digital certificate generating method comprising the steps of:
the digital certificate module (310) generating a plurality of digital certificates (DC_1-DC_n) corresponding to the communication modules (CM_1-CM_n) according to the keys (KEY_1-KEY_n); and
the digital certificate module (310) installing the digital certificates (DC_1-DC_n) corresponding to the communication modules (CM_1-CM_n) into the communication modules (CM_1-CM_n).

5. The digital certificate generating method of claim 4, **characterized in that** the step of the digital certificate module (310) generating the digital certificates (DC_1-DC_n) corresponding to the communication modules (CM_1-CM_n) according to the keys (KEY_1-KEY_n) comprises the steps of:
the digital certificate module (310) checking whether the digital certificates (DC_1-DC_n) of the communication modules (CM_1-CM_n) are accurately installed in the communication modules (CM_1-CM_n); and
the digital certificate module (310) generating the digital certificates (DC_1-DC_n) corresponding to the communication modules (CM_1-CM_n) according to the keys (KEY_1-KEY_n) when the digital certificate module (310) determines the digital certificates (DC_1-DC_n) are inaccurately installed in the communication modules (CM_1-CM_n).

6. A digital certificate generating method for an electronic device (30) comprising a plurality of communication modules (CM_1-CM_n) corresponding to a plurality of keys (KEY_1-KEY_n) and a digital certificate module (310), **characterized by** the digital certificate generating method comprising the steps of:
the digital certificate module (310) checking whether the keys (KEY_1-KEY_n) have been modified;
the digital certificate module (310) generating at least one digital certificate (DC_1-DC_n) corresponding to at least one of the communication modules (CM_1-CM_n) according to at least one of the modified keys (KEY_1-KEY_n) when the digital certificate module (310) determines the at least one of the keys (KEY_1-KEY_n) has been modified; and
the digital certificate module (310) installing the at least one digital certificates (DC_1-DC_n) corresponding to the at least one of the communication modules (CM_1-CM_n) into the at least one of the communication modules (CM_1-CM_n).

7. The digital certificate generating method of claim 6, **characterized in that** the digital certificate module (310) comprises a counter (320), configured to record a number of times of modifying the keys (KEY_1-KEY_n), and to stop generating the at least one of the digital certificates (DC_1-DC_n) when the number of times of modifying the keys (KEY_1-KEY_n) is greater than a default threshold (TH).

8. An electronic device (10), **characterized by** the electronic device (10) comprising:
a communication module (100), corresponding to a key (KEY); and
a digital certificate module (110), configured to generate a digital certificate (DC) corresponding to the communication module (100) according to the key (KEY) and install the digital certificate (DC) into the communication module (100).

9. The electronic device (10) of claim 8, **characterized in that** the digital certificate module (110) is configured to further check whether the key (KEY) has been modified, and when the key (KEY) has been modified, the digital certificate module (110) is configured to generate a new digital certificate (DC) corresponding to the communication module (100) according to the modified key (KEY).

10. The digital certificate generating method of claim 3 or the electronic device (10) of claim 9, **characterized in that** the digital certificate module (110) comprises a counter (120), configured to record a number of times of modifying the key (KEY), and to stop generating the digital certificate (DC) when the number of times of modifying the key (KEY) is greater than a predetermined threshold (TH).

11. The digital certificate generating method of claim 1 or claim 3 or the electronic device (10) of claim 8, **characterized in that** the key (KEY) is a Media Access Control address or a product number.

12. An electronic device (30), **characterized by** the electronic device (30) comprising:
a plurality of communication modules (CM_1-CM_n), corresponding to a plurality of keys (KEY_1-KEY_n); and
a digital certificate module (310), configured to generate a plurality of digital certificates (DC_1-DC_n) corresponding to the communication modules (CM_1-CM_n) according to the keys (KEY_1-KEY_n) and install the digital certificates (DC_1-DC_n) into the communication modules (CM_1-CM_n).

13. The electronic device (30) of claim 12, **characterized in that** the digital certificate module (310) is configured to further check whether at least one of the keys (KEY_1-KEY_n) has been modified, and when the at least one of the keys (KEY_1-KEY_n) has been modified, the digital certificate module (310) is configured to further generate at least one new digital certificate (DC_1-DC_n) corresponding to at least one of the communication modules (CM_1-CM_n) according to the at least one of the modified keys (KEY_1-KEY_n).

14. The electronic device (30) of claim 13, **characterized in that** the digital certificate module (310) comprises a counter (320), configured to record a number of times of modifying the keys (KEY_1-KEY_n), and stop generating the digital certificates (DC_1-DC_n) when the number of times of modifying the keys (KEY_1-KEY_n) is greater than a predetermined threshold (TH).

15. The digital certificate generating method of claim 4 or claim 6 or the electronic device (30) of claim 12, **characterized in that** the keys (KEY_1-KEY_n) are Media Access Control addresses or product numbers.
